(19) Europäisches Patentamt
European Patent Office
Office européen des brevets

(11) **EP 2 468 370 A1**

(12) **EUROPEAN PATENT APPLICATION**
published in accordance with Art. 153(4) EPC

(43) Date of publication:
   **27.06.2012 Bulletin 2012/26**

(51) Int Cl.:
   ***A63F 13/00*** *(2006.01)*

(21) Application number: **10809670.2**

(22) Date of filing: **19.04.2010**

(86) International application number:
   **PCT/JP2010/002807**

(87) International publication number:
   **WO 2011/021322 (24.02.2011 Gazette 2011/08)**

(84) Designated Contracting States:
   **AT BE BG CH CY CZ DE DK EE ES FI FR GB GR HR HU IE IS IT LI LT LU LV MC MK MT NL NO PL PT RO SE SI SK SM TR**

(30) Priority: **18.08.2009 JP 2009189374**

(71) Applicant: **Sony Computer Entertainment Inc. Tokyo 108-0075 (JP)**

(72) Inventor: **INADA, Tetsugo Tokyo 108-0075 (JP)**

(74) Representative: **Turner, James Arthur D Young & Co LLP 120 Holborn London EC1N 2DY (GB)**

(54) **CONTENT CREATION SUPPORT DEVICE, IMAGE PROCESSING DEVICE, CONTENT CREATION SUPPORT METHOD, IMAGE PROCESSING METHOD, AND DATA STRUCTURE OF IMAGE DISPLAY CONTENT**

(57)   When a creator performs an input indicating a wish to create a content (S30), a target viewpoint information acquisition unit acquires the change over time of target viewpoint coordinates (S32). A correction method specification unit specifies a method for correcting the viewpoint coordinates, which is to be carried out in a device for executing the content, on the basis of identification information relating to the device, the identification information being inputted by the creator in S30 (S34). A scenario data generation unit derives a generation expression for scenario data from the specified method for correcting the viewpoint coordinates (S36). On the basis of data relating to the change over time of the target viewpoint coordinates acquired in S32, viewpoint coordinates to be set in the scenario data for each point in time are calculated using the generation expression derived in S36 (S38). The generated scenario data, together with image data, is stored as a content file (S40).

FIG.11

```
            START

    INSTRUCT TO
  START CONTENT CREATION       S30

  ACQUIRE TARGET VIEWPOING
      COORDINATES             S32

  IDENTIFY VIEWPOINT COORDINATE
      CORRECTION METHOD        S34

   DERIVE SCENARIO DATA
    GENERATION EQUATION        S36

   GENERATE SCENARIO DATA      S38

     FORM CONTENT FILE         S40

             END
```

**EP 2 468 370 A1**

**Description**

[TECHNICAL FIELD]

The present invention relates to information processing techniques for changing a viewpoint for a display image so as to display an image.

[BACKGROUND ART]

Home entertainment systems capable of playing back moving images as well as running game programs have been proposed. In home entertainment systems, a GPU generates three-dimensional images using polygons (see, for example, patent document No. 1).

The techniques where a display area of a screen changes according to a input for moving area entered by a user using a directional key of an input device while looking at an image being displayed are widely used in various kinds of content, not only three-dimensional images of games, etc.. In such techniques, the movement of a hand operating an input device generally corresponds to the direction of the movement of a display area, allowing the user to intuitively and easily understand a relationship between input information and output results.

[Patent document No.1] US Patent No. 6563999

[SUMMARY OF THE INVENTION]

[PROBLEM TO BE SOLVED BY THE INVENTION]

Techniques that are similar to the techniques described above and that allow a display area to be automatically moved in a preset order are also being introduced in a wide range of areas such as demonstration and advertising media. In this case, since setting a display order is a separate process from the actual display process, there are problems where it is revealed, at the stage of checking, that the actual displayed image is different from that intended by the person who has set the display order, therefore requiring adjustment after the setting or requiring technical knowledge for making the setting.

In this background, a purpose of the present invention is to provide a technique for simplifying a setting task in an embodiment where an image is changed in a preset display order.

[MEANS TO SOLVE THE PROBLEM]

One embodiment of the present invention relates to a content creation supporting device. The content creation supporting device for supporting creation of content that allows an image to be displayed in an image processing device, which changes a display area of an image being displayed according to a viewpoint moving request input by a user, in such a manner that the display area is changed based on scenario data in which a change in viewpoint coordinates is set in advance regardless of the viewpoint moving request, comprises: a target viewpoint information acquisition unit configured to acquire viewpoint coordinates corresponding to a target area intended to be displayed by a content creator; a correction method identification unit configured to identify a method for correcting viewpoint coordinates obtained by sequentially converting a signal of the viewpoint moving request input by the user in the image processing device; and a scenario data generation unit configured to generate the scenario data such that the viewpoint coordinates corresponding to the target area are obtained when the viewpoint coordinates set to the scenario data are corrected by the method for correcting.

Another embodiment of the present invention relates to an image processing device. The image processing device for changing a display area of an image being displayed based on scenario data in which a viewpoint moving request input by a user or a change in viewpoint coordinates is set in advance, comprises: a display area determination unit configured to correct, by a predetermined method, viewpoint coordinates obtained by sequentially converting a signal of the viewpoint moving request input by the user and to determine, as an area to be displayed, an area corresponding to the viewpoint coordinates as corrected; and a display image processing unit configured to render an image in the area to be displayed, wherein the change in the viewpoint coordinates is set to the scenario data such that viewpoint coordinates corresponding to a target area intended to be displayed by a creator of the scenario data are obtained when set viewpoint coordinates are corrected by the predetermined method, and the display area determination unit also corrects the viewpoint coordinates set to the scenario data by the predetermined method so as to determine an area to be displayed.

Another embodiment of the present invention relates to a content creation supporting method. The content creation supporting method for supporting creation of content that allows an image to be displayed in an image processing device, which changes a display area of an image being displayed according to a viewpoint moving request input by a user, in such a manner that the display area is changed based on scenario data in which a change in viewpoint coordinates is set in advance regardless of the viewpoint moving request, comprises: receiving a specification of viewpoint coordinates corresponding to a target area intended to be displayed by a content creator; recording the received specification in memory; identifying a method for correcting viewpoint coordinates obtained by sequentially converting a signal of the viewpoint moving request input by the user in the image processing device; reading out the viewpoint coordinates corresponding to the target area; and generating the scenario data such that the viewpoint coordinates corresponding to the target area are obtained when the viewpoint coordinates set to the scenario data are corrected by the method for correcting.

Another embodiment of the present invention relates to an image processing method. The image processing method for changing a display area of an image being displayed based on scenario data in which a viewpoint moving request input by a user or a change in viewpoint coordinates is set in advance, comprising: correcting, by a predetermined method, viewpoint coordinates obtained by sequentially converting a signal of the viewpoint moving request input by the user; determining, as an area to be displayed, an area corresponding to the viewpoint coordinates as corrected; and reading out and then rendering data of an image in the area to be displayed, wherein the change in the viewpoint coordinates is set to the scenario data such that viewpoint coordinates corresponding to a target area intended to be displayed by a creator of the scenario data are obtained when set viewpoint coordinates are corrected by the predetermined method, and the viewpoint coordinates set to the scenario data are also corrected by the predetermined method during correcting.

Another embodiment of the present invention relates to a data structure of image display content. The data structure of image display content associates data of an image and scenario data in which a change in viewpoint coordinates is set in advance to allow the image to be displayed in an image processing device, which changes a display area of an image being displayed according to a viewpoint moving request input by a user, in such a manner that the display area is changed regardless of the viewpoint moving request, wherein the change in the viewpoint coordinates is set to the scenario data such that viewpoint coordinates corresponding to a target area intended to be displayed by a creator of the scenario data are obtained when set viewpoint coordinates are corrected by a method for correcting viewpoint coordinates obtained by sequentially converting a signal of the viewpoint moving request input by the user in the image processing device.

Optional combinations of the aforementioned constituting elements, and implementations of the invention in the form of methods, apparatuses, systems, computer programs, and recording media recording computer programs may also be practiced as additional modes of the present invention.

[ADVANTAGE OF THE PRESENT INVENTION]

According to the present invention, both a display area change according to a viewpoint moving request entered by the user and a display area change based on scenario data in which a change in viewpoint coordinates is set in advance can be easily achieved.

[BRIEF DESCRIPTION OF THE DRAWINGS]

Fig. 1 is a diagram illustrating a usage environment of an image processing system according to the embodiment of the present invention;

Fig. 2 is a diagram illustrating the exterior configuration of an input device applicable to the image processing system shown in Fig. 1;

Fig. 3 is a diagram illustrating the configuration of an information processing device in the present embodiment;

Fig. 4 is a diagram conceptually illustrates scenario data in the present embodiment;

Fig. 5 is a diagram illustrating a detailed configuration of a control unit having a function of displaying an image in the present embodiment;

Fig. 6 is a diagram illustrating an exemplary correction of viewpoint coordinates in the present embodiment;

Fig. 7 is a diagram illustrating a detailed configuration of a control unit having a function of generating scenario data in the present embodiment;

Fig. 8 is a diagram explaining a relationship between target viewpoint coordinates and the scenario data in the embodiment;

Fig. 9 is a diagram conceptually expressing a correction of viewpoint coordinates in a device for executing content in the present embodiment;

Fig. 10 is a diagram explaining a method for generating scenario data in the present embodiment;

Fig. 11 is a flowchart illustrating a procedure of creating content in the present embodiment; and
Fig. 12 is a flowchart illustrating a procedure of executing content in the present embodiment.

[BEST MODE FOR CARRYING OUT THE INVENTION]

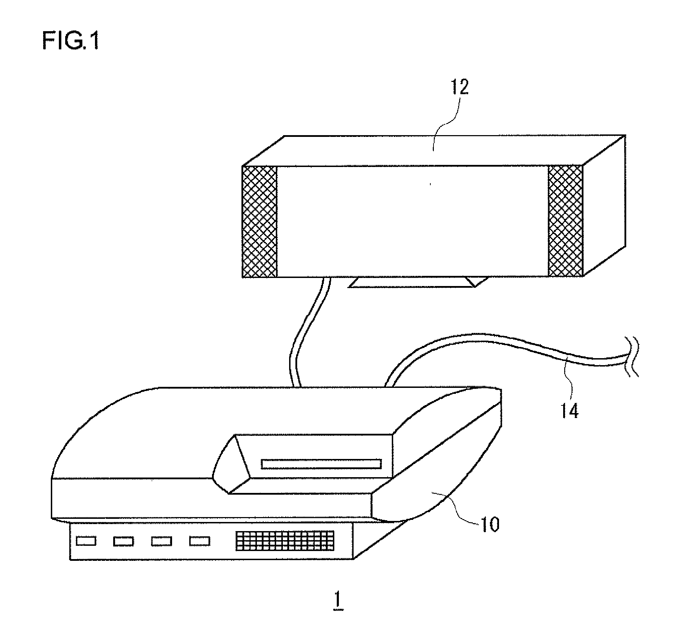

Fig. 1 illustrates the configuration of an information processing system 1 that can be used in the embodiment of the present invention. The information processing system 1 is provided with an information processing device 10 for processing content including an image and a display device 12 for outputting a processing result by the information processing device 10. The display device 12 may be a TV having a display for outputting an image and a speaker for outputting a sound. The display device 12 may be connected to the information processing device 10 via a wired cable or wirelessly via a wireless LAN (Local Area Network) or the like. The information processing device 10 may be connected to an external network through wireless communication.

When the user enters to an input device an input requesting enlarging/reducing of a display area and scrolling in a vertical or horizontal direction while looking at an image displayed on the display device 12, the input device transmits a request signal requesting enlarging/reducing of the display area and scrolling to the information processing device 10, accordingly. According to the signal, the information processing device 10 changes an area to be displayed on the screen of the display device 12. To the user, this process is equivalent to moving the user's viewpoint on the image being displayed. Hereinafter, such a change in a display area is also referred to as "viewpoint movement."

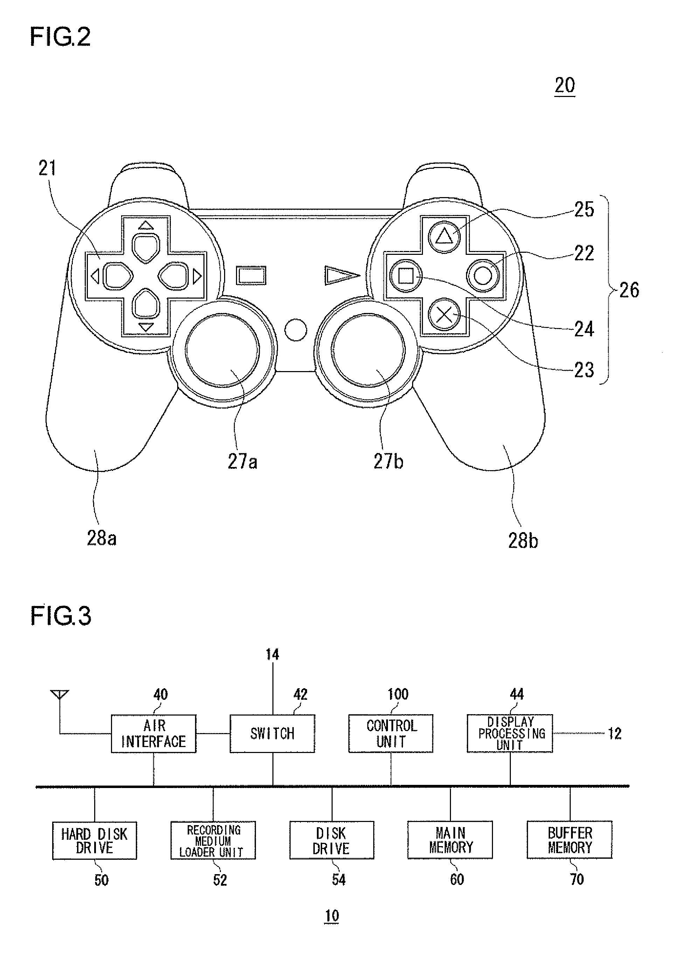

Fig. 2 illustrates an exemplary exterior configuration of the input device 20. As operation means operable by the user, the input device 20 is provided with a directional key 21, analog sticks 27a and 27b, an operation button 26 that includes four types of buttons, and hand grip portions 28a and 28b. The operation button 26 that includes four types of buttons is formed with a circle-marked button 22, an x-marked button 23, a square-marked button 24, and a triangle-marked button 25.

In an information processing system 1, functions for inputting a request for enlarging/reducing a display area and a request for scrolling in a vertical or horizontal direction in addition to a content startup/shutdown request and a request for executing various functions according to content are assigned to the operation means of the input device 20. For example, a function of inputting a request for enlarging/reducing an image is assigned to the analog stick 27b on the right side. The user can input a request for reducing a display image by pulling the analog stick 27b toward the user and input a request for enlarging the display image by pushing the analog stick 27b away from the user. The speed of changing an enlargement ratio may be adjusted according to the angle of tilting the analog stick 27b.

A function of inputting a request for scrolling a display area is assigned to the analog stick 27a. Tilting the analog stick 27a in any direction, the user can input a request for scrolling in the direction. The speed of scrolling may be adjusted according to the tilting angle. A function of inputting a request for moving the display area may be assigned to another operation means. For example, a function of inputting a scroll request may be assigned to the directional key 21.

The input device 20 has the function of transferring an input request signal to the information processing device 10. In the embodiment, the input device 20 is configured to be capable of communicating with the information processing device 10 wirelessly. The input device 20 and the information processing device 10 may establish wireless communication by using the Bluetooth (registered trademark) protocol or IEEE 802.11 protocol. The input device 20 may be connected to the information processing device 10 via a cable so as to transmit various request signals to the information processing device 10.

An explanation is given of a basic configuration of an information processing device according to the present embodiment. Fig. 3 shows the configuration of the information processing device 10. The information processing device 10 is provided with an air interface 40, a switch 42, a display processing unit 44, a hard disk drive 50, a recording medium loader unit 52, a disk drive 54, main memory 60, a buffer memory 70, and a control unit 100. The display processing unit 44 has a frame memory for buffering data to be displayed on a display of the display device 12.

The switch 42 is an Ethernet switch (Ethernet is a registered trademark) and a device that is connected to an external device by cable or wirelessly so as to transmit and receive data. The switch 42 connects to the air interface 40, and the air interface 40 connects to the input device 20 through a predetermined wireless communication protocol. Various request signals that are input by the user in the input device 20 are provided to the control unit 100 via the air interface 40 and the switch 42.

The hard disk drive 50 functions as a storage device that stores content data that includes image data to be displayed. When a removable recoding medium such as a memory card is loaded, the recording medium loader unit 52 reads out data from the removable recoding medium. When a read-only ROM disk is loaded, the disk drive 54 drives and recognizes the ROM disk, and the disk drive 54 then reads out data. The ROM disk may be an optical disk or a magnetooptical disk. Various types of data such as image data may be recorded in the removable recoding medium.

The control unit 100 is provided with a multi-core CPU and has one versatile processor core and a plurality of simple processor cores in one CPU. The versatile processor core is referred to as a PPU (Power Processing Unit), and the remaining processor cores are referred to as a SPU (Synergistic-Processing Unit).

The control unit 100 is provided with a main controller that connects to the main memory 60 and the buffer memory 70. The PPU has a register and is provided with a main processor as a main body for executing the calculation so as to efficiently assign a task serving as a basic processing unit in the application to execute to each SPU. The PPU itself may execute the task. The SPU is provided with a register, a sub-processor as an entity of execution, and a local memory as a local storage area. The local memory may be used as the buffer memory 70.

The main memory 60 and the buffer memory 70 are storage devices and are formed as random access memories (RAM). The SPU is provided with a dedicated direct memory access (DMA) controller as a control unit and is capable of high-speed data transfer between the main memory 60 and the buffer memory 70. High-speed data transfer is also achieved between the frame memory in the display processing unit 44 and the buffer memory 70. The control unit 100 according to the embodiment implements high-speed image processing by operating a plurality of SPUs in parallel. The display processing unit 44 is connected to the display device 12 and outputs a result of image processing in accordance with user request.

In order to smoothly update a display image in accordance with the movement of a display area, the information processing device 10 may load at least a part of the image data from the hard disk drive 50 into the main memory 60 in advance. An area to be displayed in future may be predicted based on the direction of the movement of the viewpoint obtained so far, and a part of the image data loaded into the main memory 60 may be further decoded and then stored in the buffer memory 70. This allows instant switching of images used for creation of displayed image when the switching is required later.

In the present embodiment, the information processing device 10, which displays an image with moving a viewpoint by a user's input for viewpoint movement, also executes content in which a display area is automatically moved without the input for viewpoint movement. Also, the creation of the content is supported. More specifically, scenario data that is to be associated, as content, with the data of an image to be displayed and that defines a change in viewpoint coordinates of the image is generated.

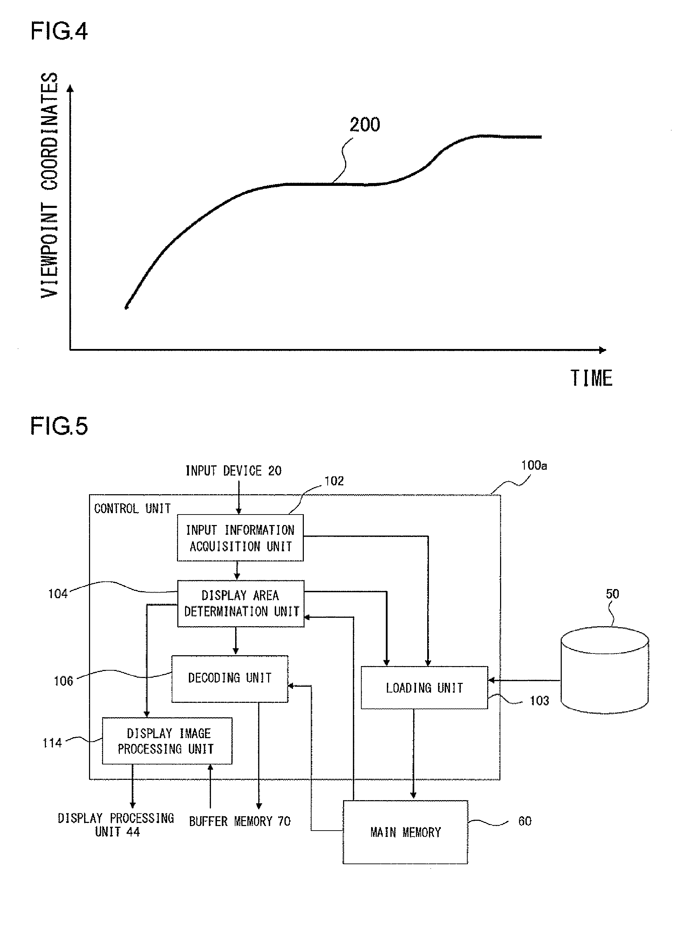

Fig. 4 is a conceptual diagram of scenario data. The scenario data basically defines the movement of a viewpoint for viewing an image and is expressed as a change 200 in viewpoint coordinates over time as shown in the figure. When scrolling of a display area in vertical and horizontal directions is only allowed, the viewpoint coordinates are in two dimension that form a horizontal plane parallel to an image plane. When enlargement and reduction of the image are possible, the viewpoint coordinates are in three dimension including an axis that is perpendicular to the horizontal plane. To facilitate understanding, the viewpoint coordinates are represented in one dimension by a vertical axis in the figure. The scenario data may be formed by a plurality of viewpoint coordinates that are set discretely with respect to time.

In executing content associated with scenario data in the information processing device 10, both a mode for receiving a user's input for viewpoint movement and a mode for automatically moving a viewpoint based on the scenario data may be realized for a same image. Hereinafter, the former is referred to as a "manual mode," and the latter is referred to as a "scenario mode." A rule for switching a mode may be introduced whereby, for example, the mode changes to the manual mode if the user operates the input device 20 to input for viewpoint movement during the display of an image in the scenario mode, and the mode changes to the scenario mode if no input for viewpoint movement is entered for a predetermined period of time. On the other hand, the content may be executed only in the scenario mode.

In order to reproduce music or display another image, e.g., video at the same time, the content to be created may further contain music data or image data in addition to the scenario data. By such content, music can be reproduced in synchronization with displaying an image while changing the display area, or a plurality of image materials can be displayed or reproduced in parallel while performing synchronization. Such content allows for generation of various video works and data for demonstration purposes.

First, an explanation is given of a device for executing created content. In the hard disk drive 50 in the information processing device 10, content containing image data associated with scenario data is stored. As described above, data other than the image data, e.g., game programs, music data, different video data, etc., may be included in the content according to the content. For the processing thereof, a commonly-used method according to a data type can be applied. Therefore the explanation thereof is omitted in the following.

Fig. 5 illustrates a detailed configuration of a control unit 100a that has a function of displaying an image. The control unit 100a includes an input information acquisition unit 102 for acquiring information regarding operation performed by the user on the input device 20, a loading unit 103 for loading data necessary for processing content from the hard disk drive 50, a display area determination unit 104 for sequentially determining a display area according to user's operation or scenario data, a decoding unit 106 for decoding compressed image data, and a display image processing unit 114 for rendering a display image.

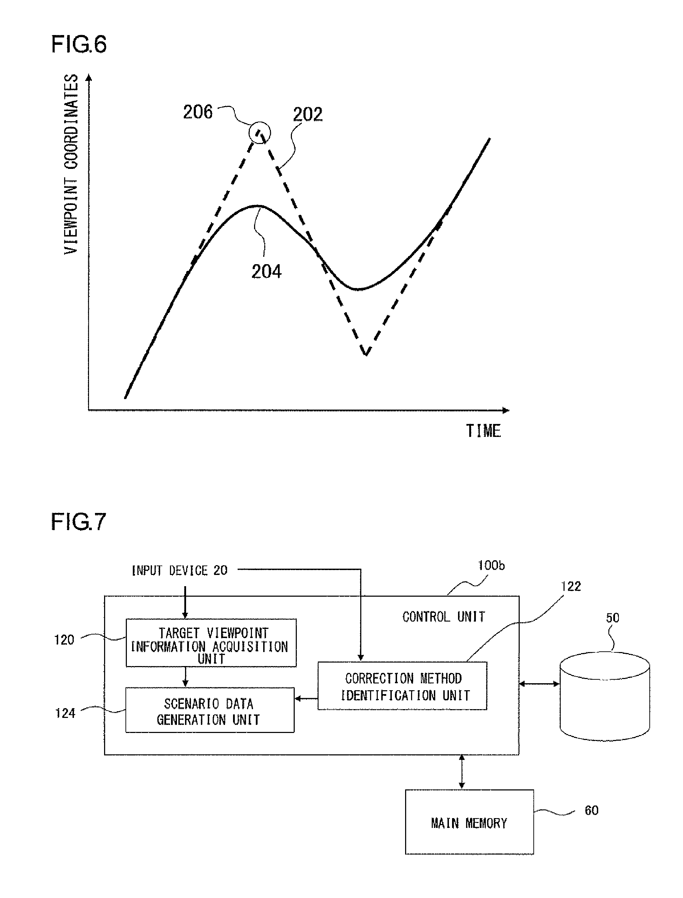

In Fig. 5 and later Fig. 7, the elements shown in functional blocks that indicate a variety of processes are implemented in hardware by any CPU (Central Processing Unit), memory, or other LSI's, and in software by a program loaded in memory, etc. As stated previously, the control unit 100 has one PPU and a plurality of SPU's, and functional blocks can be formed by a PPU only, a SPU only, or the cooperation of both. Therefore, it will be obvious to those skilled in the art that the functional blocks may be implemented in a variety of manners by a combination of hardware and software.

In accordance with the user's operation on the input device 20, the input information acquisition unit 102 acquires from the input device 20 a request signal for starting up/shutting down content, moving a viewpoint, or the like and notifies the display area determination unit 104 and the loading unit 103 of the information as necessary. Upon the notification of information indicating that a request for starting up the content has been made from the input information acquisition unit 102, the loading unit 103 reads out from the hard disk drive 50 data necessary for displaying an image such as image data of an initial image, scenario data, and a program and stores the data in the main memory 60. The initial image is displayed on the display device 12 by being decoded by the decoding unit 106 and by being rendered by the display image processing unit 114 in the frame memory of the display processing unit 44.

When the user enters to the input device 20 an input for instructing the execution of the scenario mode, or when the user does not input for instructing the execution of the manual mode for a predetermined period of time, the display area determination unit 104 receives a notification indicating as such from the input information acquisition unit 102 and determines coordinates of the four corners of a subsequent display area, i. e., frame coordinates, according to viewpoint coordinates for each time instance based on the scenario data stored in the main memory 60. The "subsequent display area" is a display area displayed after an interval of time that is allowed for the update, following the display of the "previous display area." The interval of time depends on a vertical synchronous frequency, etc., of the display device.

On the other hand, when the user input for instructing the execution of the manual mode, the display area determination unit 104 receives, from the input information acquisition unit, a viewpoint moving request signal entered by the user and determines the frame coordinates of the subsequent display area by converting the moving request signal into viewpoint coordinates.

The definition of "viewpoint coordinates" and the "frame coordinates" are not particularly limited as long as they are derived from a viewpoint moving request signal from the input device 20, and serve as intermediate parameters for determining a display area ultimately. As described hereinafter, an increase in implementation costs due to the implementation of both the manual mode and the scenario mode and time required for switching between the modes can be suppressed by directly using, in the scenario mode, parameters that are used in the manual mode, in the present embodiment.

The decoding unit 106 reads out a part of image data from the main memory 60, decodes the data, and stores the decoded data in the buffer memory 70. Data to be decoded by the decoding unit 106 may be image data of a predetermined size that covers a display area. A smooth display area movement can be achieved, since the number of times the reading out from the main memory 60 occurs can be reduced by decoding a broad range of image data and then storing the decoded image data in the buffer memory 70 in advance. The display image processing unit 114 acquires frame coordinates of an area to be displayed, which are determined by the display area determination unit 104, reads out corresponding image data from the buffer memory 70, and renders the image data in the frame memory of the display processing unit 44.

A situation where an image is displayed in the manual mode in a device having a configuration such as the one described above is now considered. At this time, problems shown in the following possibly arise if viewpoint coordinates determined by a viewpoint moving request signal are directly reflected in frame coordinates at that point. Even when a target area is displayed while the user is in the middle of inputting for viewpoint movement, the following situations can be possible where: the operation of inputting for the viewpoint movement cannot be stopped immediately, passing the target area; the target is lost; or it is hard to see the target since the movement occurs too rapidly. It is also possible that the loading of image data from the hard disk drive 50 into the main memory 60 or the decoding of the image data by the decoding unit 106 cannot be completed in time due to the movement occurring too rapidly.

For preventing such problems from occurring while maintaining responsiveness to the operation on the input device 20, the display area determination unit 104 corrects viewpoint coordinates that are obtained directly from a viewpoint moving request signal for each time instance so as to reduce drastic changes in a viewpoint, in the present embodiment. The "viewpoint coordinates that are obtained directly" are, for example, viewpoint coordinates moved from previous viewpoint coordinates by the amount of distance obtained by multiplying a moving speed obtained from the angle of the analog stick 27a by time until the subsequent image display.

For moderating the drastic changes in viewpoint coordinates calculated for each time instance as described above, the correction is performed in consideration of the movement of the viewpoint coordinates occurring immediately before. For example, viewpoint coordinates obtained directly at each time instance are converted into a Gaussian function with respect to time, and convolution operation from viewpoint coordinates obtained at the previous time instances is then performed using a convolution filter. Alternatively, a weighted summation is performed along with viewpoint coordinates obtained for a predetermined number of previous time instances.

Fig. 6 illustrates an exemplary correction of viewpoint coordinates. In the figure, a dashed line 202 shows an example of a change over time in viewpoint coordinates that are obtained directly from a viewpoint moving request signal. A change over time in viewpoint coordinates such as the one shown by a solid line 204 can be obtained by correcting the dashed line as described above. Performing such a correction allows drastic changes in viewpoint coordinates to be moderated so that problems such as those described above can be alleviated.

As described above, both the manual mode and the scenario mode are achieved in the information processing device 10 including the control unit 100a. In this case, subsequent processes can be performed equally by introducing the same parameters, which are "viewpoint coordinates," in both modes. This allows for the modes to be switched simply by switching information sources of viewpoint coordinates between a viewpoint moving request signal and scenario data, and both time required for the switching of the modes and implementation costs can thus be reduced.

However, in such implementation, the above-described correction of viewpoint coordinates performed in the manual mode presents a problem. More specifically, although the creator of content generated scenario data so that the display is guided to display a target area intended to be displayed, there are possibilities that the display does not reach the target area or that the display timing becomes off due to correction that is made, at the time of display, on viewpoint coordinates of the scenario data thus generated. This problem is caused due to a difference in modes where a viewpoint is moved to explore within an image in the manual mode whereas a viewpoint is moved toward a clear target area in the scenario mode.

For example, even if viewpoint coordinates 206 shown in Fig. 6 are set corresponding to target areas and scenario data is generated as represented by the dashed line 202, the target area will not be displayed once the viewpoint coordinates are corrected as shown by the solid line 204 at the time of content execution. Furthermore, in the case of content where different video or music is reproduced in parallel, a situation can arise where synchronization with the video or music that is taken into consideration in the generated scenario data becomes off due to the correction. In such a case, the scenario data must be modified through trial and error to achieve the purpose, becoming a heavy burden at the time of content creation.

In the present embodiment, in consideration of the correction made on viewpoint coordinates at the time of content execution, correction is made on scenario data itself at the time of content creation. A basic device configuration can be achieved by the information processing device 10 shown in Fig. 3. Fig. 7 illustrates a detailed configuration of a control unit 100b that has a function of generating scenario data. The control unit 100b may be provided in the information processing device 10 integrally with the control unit 100a shown in Fig. 5 that has a function of displaying an image. In this case, the generation of both the scenario data and content for which the scenario data is used and the execution of the content including the actual image display can be achieved in the same device. On the other hand, the information processing device 10 may be configured as an authoring device provided with only the control unit 100b. Alternatively, the content execution and the authoring execution may be realized separately in the same information processing device 10 by activating different application software.

The control unit 100b includes a target viewpoint information acquisition unit 120 for acquiring information regarding viewpoint coordinates that correspond to a target area set by the creator of content, a correction method identification unit 122 for identifying a correction method for viewpoint coordinates in an device for executing the content, and a scenario data generation unit 124 for generating scenario data in consideration of the correction of the viewpoint coordinates. The target viewpoint information acquisition unit 120 receives information regarding the target areas input by the content creator to the input device 20, acquires target viewpoint coordinates that correspond to the target areas, and stores the acquired target viewpoint coordinates in the main memory 60. For example, the content creator is allowed to register the target area by, for example, displaying a GUI (Graphical user Interface) for generating scenario data on the display device 12 so as to derive corresponding target viewpoint coordinates. Alternatively, data of a change over time in the target viewpoint coordinates that is stored in advance in the hard disk drive 50 in a format equivalent to that of scenario data may be read out.

In the former case, the target viewpoint information acquisition unit 120 is made to have a configuration similar to, for example, that of the control unit 100a shown in Fig. 5 that has a display function. The content creator then moves the viewpoint coordinates by using the input device 20 while checking an image displayed on the display device 12 and registers the corresponding viewpoint coordinates by, for example, pressing a predetermined button of the input device 20 while the target area is being displayed. The target viewpoint information acquisition unit 120 interpolates a plurality of the registered target viewpoint coordinates with a straight line or a predetermined curve so as to convert the target viewpoint coordinates in a format equivalent to that of scenario data, as necessary.

In the latter case, the content creator inputs the name of the data of a change over time in the target viewpoint coordinates stored in the hard disk drive 50, with use of the input device 20. For example, the target viewpoint information acquisition unit 120 allows the display device 12 to display a selection screen for the data of a change over time in the target viewpoint coordinates that is stored in the hard disk drive 50 so that the content creator makes a selection by using the input device 20.

Alternatively, the target viewpoint information acquisition unit 120 may allow the display device 12 to display a text editing screen so that the content creator registers information of the target area by inputting a character string with use of a keyboard (not shown) of the input device 20 or the like. For example, the content creator is allowed to set items such as the target area, display time for the area, and travel time required to reach the subsequent target area in a markup language such as an XML document. The target viewpoint information acquisition unit 120 interpolates a correspondence between viewpoint coordinates and time each derived from the target area discretely registered as described so as to generate data of a change over time in the target viewpoint coordinates.

Based on the information regarding a device for executing content to be created that has been input by the content creator to the input device 20, the correction method identification unit 122 identifies a correction method for viewpoint coordinates that is used in the device. For this purpose, a correction method table that associates the model name of the device for executing the content with a correction method used for the model is stored in the hard disk drive 50. Instead of the model name, the name of application software, the identification information or type information of the model, or the like may be used. The correction method represents the identification information of a correction method to be introduced such as a convolution filter or a weighted summation, the value of a parameter used for each method, or the like.

The scenario data generation unit 124 performs inverse operation of a correction method of the device, which is for executing the content, on the data of a change over time in the target viewpoint coordinates read out from the main memory 60. For example, an input variable for a correction equation used in the device for executing the content is set to be an unknown value, and an output variable is set to be the target viewpoint coordinates. The equation is then solved for the unknown value for each time instance. A method for the inverse operation can be mathematically derived depending on the correction method; for example, if the correction equation is matrix operation, an inverse matrix is used. Scenario data in consideration of the correction of viewpoint coordinates is generated by describing, as the viewpoint coordinates, thus obtained value in a chronological order.

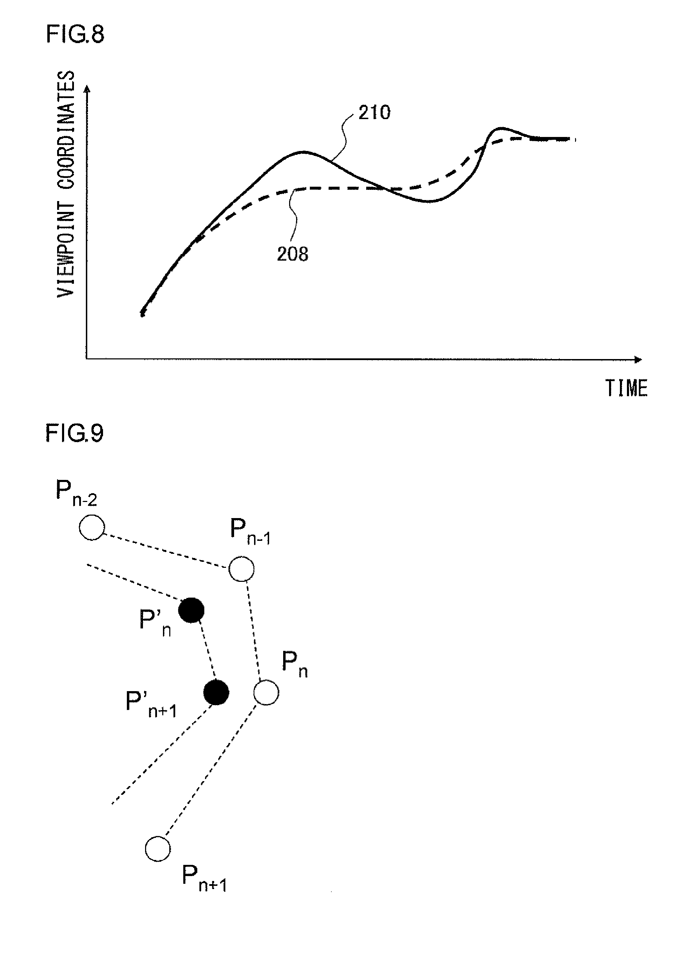

Fig. 8 is a diagram explaining a relationship between the target viewpoint coordinates and the scenario data. In the figure, a dashed line 208 shows a change over time in target viewpoint coordinates, and is identical to a line representing the scenario data shown in Fig. 4. In other words, the content creator desires the movement of a viewpoint such as the one represented by the dashed line 208 in the scenario mode. When the target viewpoint information acquisition unit 120 acquires or generates such a change over time in the target viewpoint coordinates, the scenario data generation unit 124 performs the above-stated inverse operation and obtains a change over time in the viewpoint coordinates such as the one represented by the solid line 210. This change over time is stored in the hard disk drive 50 as final scenario data. A content file is then formed by associating the scenario data with image data. As content, different video data, music data, programs, etc., are arbitrarily added as described above.

A detailed description is now given of a specific example of a method for correcting viewpoint coordinates and a method for generating scenario data. Fig. 9 conceptually expresses the correction of viewpoint coordinates in a device for executing content. In the figure, open circles $P_{n-2}$, $P_{n-1}$, $P_n$, $P_{n+1}$, ... represent viewpoint coordinates that are used as input values at time n-2, n-1, n, n+1, ... at which an image frame is updated, respectively, while filled circles $P'_n$, $P'_{n+1}$ ... represent viewpoint coordinates as corrected that correspond to a frame to be actually displayed at time n, n+1, ..., respectively. The viewpoint coordinates that are used as input values are directly derived from a viewpoint moving request signal in the manual mode.

The device performs a weighted summation of 1/4, 1/2, and 1/4 in order on viewpoint coordinates obtained before the correction at three time instances for last two frames and a frame to be corrected, respectively, so as to obtain the viewpoint coordinates as corrected. In other words, the viewpoint coordinates $P'_n$ as corrected at time n is

$$P'_n = \frac{1}{4}\ P_{n-2} + \frac{1}{2}\ P_{n-1} + \frac{1}{4}P_n \qquad (\text{Equation 1})$$

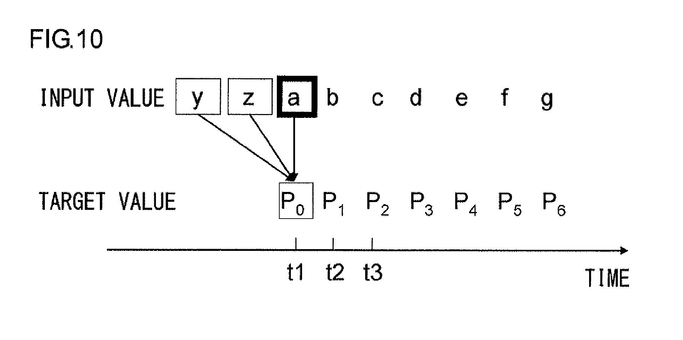

When generating scenario data for content executed in a device in which correction is performed by such a method, the filled circles shown in Fig. 9 represent target viewpoint coordinates. The open circles represent viewpoint coordinates to be input to obtain the target viewpoint coordinates, in other words, represent viewpoint coordinates to be expressed in the scenario data. Fig. 10 is a diagram explaining a method for generating the scenario data. In the figure, the horizontal axis represents time course; the lower column shows target viewpoint coordinates at respective time instances during the execution of the content, and the upper column shows viewpoint coordinates at respective time instances that are to be input therefor, in other words, viewpoint coordinates set to the scenario data.

According to the equation 1, the current viewpoint coordinates as corrected are derived with use of input viewpoint coordinates for three frames. Thus, in order to obtain target viewpoint coordinates $P_0$ at time t1, the following equation can be formulated using, as input values, input viewpoint coordinates a at the current time, input viewpoint coordinates z for the last frame, and input viewpoint coordinates y for the second to the last frame.

$$P_0 = \frac{1}{4}y + \frac{1}{2}z + \frac{1}{4}a \qquad (\text{Equation } 2)$$

Therefore, the viewpoint coordinates to be input at time t1 to the device for executing the content, in other words, viewpoint coordinates to be set to the scenario data can be obtained as follows:
$$a = 4P_0 - y - 2z \qquad (\text{Equation } 3)$$

Similarly, viewpoint coordinates b, c, ... to be input at subsequent time t2, t3, ..., respectively, can be obtained, for example, as follows:
$$b = 4P_1 - z - 2a \qquad (\text{Equation } 4)$$

$$c = 4P_2 - a - 2b \qquad (\text{Equation } 5)$$

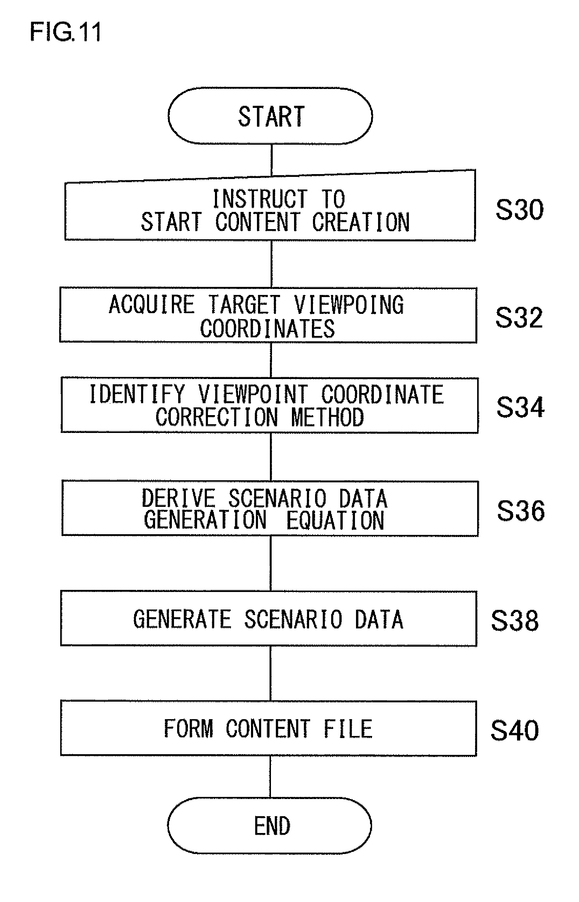

In the equations, P1 and P2 represent target viewpoint coordinates obtained at time t2 and t3, respectively. A change over time in the viewpoint coordinates to be input, in other words, the scenario data can be obtained by repeating the above calculation for respective time instances.
The equations 3-5 are used to generate the scenario data for executing the content by the device performing correction on the viewpoint coordinates according to the equation 1. Obviously, an equation for generating the scenario data varies depending on a method for correcting viewpoint coordinates. However, the viewpoint coordinates to be input can be obtained by setting the viewpoint coordinates to be input as an unknown value and then by solving the equation for the unknown value in a similar manner. The equation for generating the scenario data may be obtained in advance in association with an expected method for correcting viewpoint coordinates and stored in the hard disk drive 50. Alternatively, the equation for generating the scenario data may be obtained by the scenario data generation unit 124 at the time of generating the scenario data. The equation for generating the scenario data may be directly associated in advance with the model of the device for executing the content or the like so that the correction method identification unit 122 acquires the equation for generating the scenario data instead of the method for correcting viewpoint coordinates from a table stored in the hard disk drive 50.
A detailed description will now be made regarding operations that can be realized by the configurations described thus far. Fig. 11 is a flowchart illustrating a procedure of creating content in the present embodiment that is performed by the information processing device 10 that includes the control unit 100b shown in Fig. 7. When the creator enters an input indicating that the creator desires to create content (S30), the target viewpoint information acquisition unit 120 acquires a change over time in target viewpoint coordinates and stores the acquired change over time in the main memory 60 (S32). The creator inputs identification information of the device for executing the content at the same time in S30.

As described above, in the process in S32, the data of the change over time in the target viewpoint coordinates selected by the user may be read out from the hard disk drive 50. Alternatively, when the creator inputs information regarding a target area, the change over time in the target viewpoint coordinates may be derived from the information. From the aspect of content generation, the creator may generate image data and, for example, specify different video data, music data, and programs at the same time. The schematic illustration is omitted in the figure.

Then, based on the identification information of the device for executing the content input by the creator in S30, the correction method identification unit 122 identifies the method for correcting viewpoint coordinates used in the device, in reference to the table stored in the hard disk drive 50 (S34). The scenario data generation unit 124 then derives an equation for generating the scenario data based on the identified method for correcting viewpoint coordinates (S36) .

The scenario data generation unit 124 then reads out from the main memory 60 the data of the change over time in the target viewpoint coordinates acquired in S32, calculates viewpoint coordinates to be set to the scenario data for respective time instances by using the generation equation derived in S36, and generates the scenario data by arranging the calculated viewpoint coordinates in a chronological order (S38). The generated scenario data is stored in the hard disk drive 50 along with the image data and other data as a content file (S40).

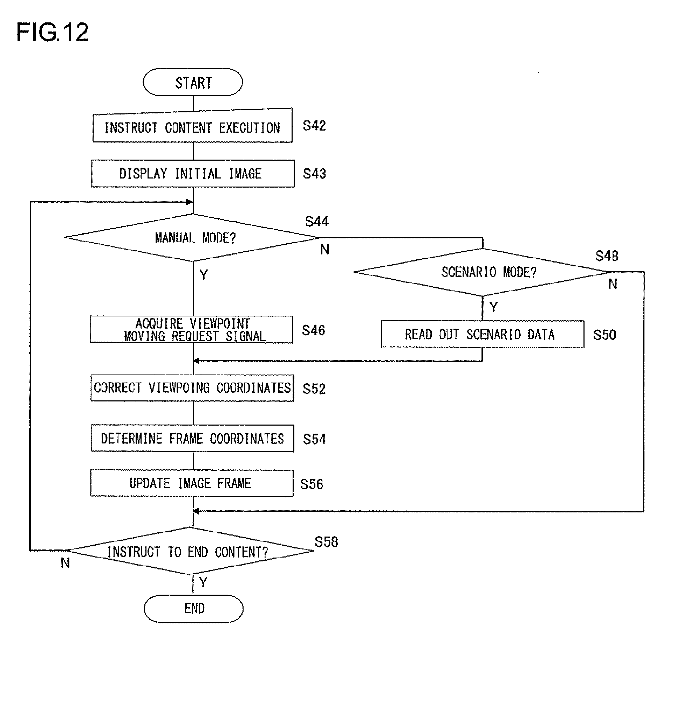

Fig. 12 is a flowchart illustrating a procedure of executing content in the present embodiment that is performed by the information processing device 10 that includes the control unit 100a shown in Fig. 5. When the user enters an input indicating that the user desires to execute the content (S42), the decoding unit 106 reads out the data of an initial image from the main memory 60 and decodes it in response so that the initial image is displayed on the display device 12 by the display image processing unit 114 and the display processing unit 44 (S43) .

When the mode becomes the manual mode by, for example, an input for viewpoint movement entered by the user (Y in S44) , the display area determination unit 104 acquires a viewpoint moving request signal obtained by the input (S46) and corrects, by a predetermined correction method, viewpoint coordinates directly obtained from the signal (S52) . On the other hand, when the mode becomes the scenario mode by, for example, the absence of an input for viewpoint movement for a predetermined period of time (N in S44, Y in S48) , the display area determination unit 104 reads out the scenario data from the main memory 60 (S50) and corrects, by the same correction method as the one shown above, viewpoint coordinates defined therein (S52).

In both of the manual and scenario modes, frame coordinates are determined based on the corrected viewpoint coordinates (S54). The decoding unit 106, the display image processing unit 114, and the display processing unit 44 update a frame image in corporation with one another (S56). When a condition where the mode is not in either the manual mode or the scenario mode due to the details of the content (N in S44, N in S48), the condition is maintained unless the user instructs to end the content (N in S58). The operation specified by S44 through N in S58 is repeated until an instruction to end the content is provided (Y in S58). This allows for viewpoint movement in both modes by a similar process.

According to the present embodiment described above, scenario data is generated from target viewpoint coordinates by acquiring a method of correcting viewpoint coordinates that is used in a content execution device which accepts the user's input for viewpoint movement, and then by performing inverse operation thereof. Including the scenario data and image data to form content allows both a mode where the user inputs for viewpoint movement and a mode where a viewpoint is moved based on the scenario data to be achieved in the same content execution device. In other words, while a problem can be avoided such as difficulty in viewing caused by rapid movement of a viewpoint and such as delay in image rendering in the former mode, display can be realized as intended by the content creator in the latter mode. A burden placed on the scenario data creator of repeating trial and error to display, as intended, an area desired to be displayed can be reduced for generation of the scenario data.

In the content execution device, the same process including viewpoint coordinate correction can be used in both the mode where the user inputs for viewpoint movement and the mode where a viewpoint is moved based on the scenario data. This allows the amount of time required for switching between the modes to be reduced. Thus, it is compatible with the situation where, for example, the modes are frequently switched each other for a display image, and can be applied to a wider range of content. Also, even when provided with the two modes, the processes can be unified, and implementation costs can thus be reduced.

Described above is an explanation of the present invention based on the embodiments. The embodiment is intended to be illustrative only, and it will be obvious to those skilled in the art that various modifications to constituting elements and processes could be developed and that such modifications are also within the scope of the present invention.

For example, in the present embodiment, a method of correcting viewpoint coordinates used at the stage of executing content by a device specified by the user is identified, and scenario data that corresponds to the device is generated. Meanwhile, a plurality of scenario data items that correspond to a plurality of devices specified or predetermined by the user may be generated at the same time. A correction method used in each of the devices is identified in reference to a correction method table as in the present embodiment, and scenario data is generated for each device by performing inverse operation of each correction equation at this time.

Each scenario data thus generated is included in a content file in association with the identification information of the device. When executing the content, a scenario mode similar to that of the present embodiment can be achieved by reading out the scenario data associated with the device for executing the content from the content file. This allows for the generation of a versatile content file.

In the present embodiment, scenario data is generated such that the intention of a content creator is expressed in display. Therefore, it is possible that, at the stage of executing the content, the loading or decoding of image data cannot be completed in time due to viewpoint movement occurring too rapidly even after correction of viewpoint coordinates, which are described by the scenario data. Accordingly, in an information processing device that has a function of generating scenario data, an upper limit may be provided to a viewpoint moving speed in advance. In this case, for example, the target viewpoint information acquisition unit 120 checks whether a derivative of a change over time in target viewpoint coordinates derived from information regarding a target area that was entered by the creator at the stage of generating a scenario does not exceed the upper limit.

When there is exceedance beyond the upper limit in the change over time in the target viewpoint coordinates, the target viewpoint information acquisition unit 120 ensures that the moving speed of a viewpoint does not exceed the upper limit by making an adjustment such as reducing the moving speed or changing a moving path when interpolating a viewpoint that is directed to the target area input by the creator. Alternatively, a warning indicating that the viewpoint moving speed exceeds the upper limit may be displayed on the display device 12 so as to prompt the creator to review the information regarding the target area. This allows for the generation of scenario data in which the user's intention is certainly expressed.

[DESCRIPTION OF THE REFERENCE NUMERALS]

1 information processing system, 10 information processing device, 12 display device, 20 input device, 44 display processing unit, 50 hard disk drive, 60 main memory, 70 buffer memory, 100 control unit, 102 input information acquisition unit, 103 loading unit, 104 display area determination unit, 106 decoding unit, 114 display image processing unit, 120 target viewpoint information acquisition unit, 122 correction method identification unit, 124 scenario data generation unit

[INDUSTRIAL APPLICABILITY]

As described above, the present invention is applicable to an information processing device such as a computer, a game device, and an image processing device.

**Claims**

1. A content creation supporting device for supporting creation of content that allows an image to be displayed in an image processing device, which changes a display area of an image being displayed according to a viewpoint moving request input by a user, in such a manner that the display area is changed based on scenario data in which a change in viewpoint coordinates is set in advance regardless of the viewpoint moving request, comprising:

   a target viewpoint information acquisition unit configured to acquire viewpoint coordinates corresponding to a target area intended to be displayed by a content creator;
   a correction method identification unit configured to identify a method for correcting viewpoint coordinates obtained by sequentially converting a signal of the viewpoint moving request input by the user in the image processing device; and
   a scenario data generation unit configured to generate the scenario data such that the viewpoint coordinates corresponding to the target area are obtained when the viewpoint coordinates set to the scenario data are corrected by the method for correcting.

2. The content creation supporting device according to claim 1, wherein the scenario data generation unit derives the viewpoint coordinates set to the scenario data by setting an output variable of an operation expression used in the correction method to the viewpoint coordinates corresponding to the target area and then by solving the operation expression for an input variable.

3. The content creation supporting device according to claim 1 or 2, wherein, in reference to a table associating identification information of the image processing device with the method for correcting, the correction method identification unit identifies the method for correcting based on the identification information specified by the content creator.

**4.** The content creation supporting device according to any one of claim 1 through claim 3, wherein the target viewpoint information acquisition unit acquires the change over time in the viewpoint coordinates corresponding to the target areas by receiving a plurality of specifications on the target areas and then by interpolating a plurality of viewpoint coordinates that correspond to the target areas.

**5.** The content creation supporting device according to claim 4 further comprising:

an image display unit configured to display an image to be displayed at the time of content execution in the image processing device and to change a display area according to a viewpoint moving request input by the content creator, wherein

the target viewpoint information acquisition unit receives as the target area a display area of the image displayed on the image display unit obtained when the content creator enters a predetermined instruction input.

**6.** The content creation supporting device according to claim 3, wherein

the correction method identification unit identifies a plurality of methods for correcting associated with respective identification information items of a plurality of image processing devices in reference to the table, and

the scenario data generation unit generates scenario data that is different for each of the identification information items of the image processing devices and includes the generated scenario data in a content file in association with the identification information.

**7.** An image processing device for changing a display area of an image being displayed based on a viewpoint moving request input by a user or based on scenario data in which a change in viewpoint coordinates is set in advance, comprising:

a display area determination unit configured to correct, by a predetermined method, viewpoint coordinates obtained by sequentially converting a signal of the viewpoint moving request input by the user and to determine, as an area to be displayed, an area corresponding to the viewpoint coordinates as corrected; and

a display image processing unit configured to render an image in the area to be displayed, wherein

the change in the viewpoint coordinates is set to the scenario data such that viewpoint coordinates corresponding to a target area intended to be displayed by a creator of the scenario data are obtained when set viewpoint coordinates are corrected by the predetermined method, and

the display area determination unit also corrects the viewpoint coordinates set to the scenario data by the predetermined method so as to determine an area to be displayed.

**8.** The image processing device according to claim 7, wherein the display area determination unit corrects the viewpoint coordinates obtained by sequentially converting the signal of the viewpoint moving request by performing a weighted summation on the viewpoint coordinates obtained by sequentially converting the signal and a predetermined number of previous viewpoint coordinates.

**9.** The image processing device according to claim 7, wherein the display area determination unit reads out one scenario data item corresponding to identification information of an own image processing device from a plurality of scenario data items prepared for a plurality of methods for correcting viewpoint coordinates, corrects viewpoint coordinates set to the scenario data, and determines an area to be displayed.

**10.** A content creation supporting method for supporting creation of content that allows an image to be displayed in an image processing device, which changes a display area of an image being displayed according to a viewpoint moving request input by a user, in such a manner that the display area is changed based on scenario data in which a change in viewpoint coordinates is set in advance regardless of the viewpoint moving request, comprising:

receiving a specification of viewpoint coordinates corresponding to a target area intended to be displayed by a content creator;

recording the received specification in memory;

identifying a method for correcting viewpoint coordinates obtained by sequentially converting a signal of the viewpoint moving request input by the user in the image processing device;

reading out the viewpoint coordinates corresponding to the target area; and

generating the scenario data such that the viewpoint coordinates corresponding to the target area are obtained when the viewpoint coordinates set to the scenario data are corrected by the method for correcting.

**11.** An image processing method for changing a display area of an image being displayed based on a viewpoint moving request input by a user or based on scenario data in which a change in viewpoint coordinates is set in advance, comprising:

correcting, by a predetermined method, viewpoint coordinates obtained by sequentially converting a signal of the viewpoint moving request input by the user;

determining, as an area to be displayed, an area corresponding to the viewpoint coordinates as corrected; and

reading out and then rendering data of an image in the area to be displayed, wherein

the change in the viewpoint coordinates is set to the scenario data such that viewpoint coordinates corresponding to a target area intended to be displayed by a creator of the scenario data are obtained when set viewpoint coordinates are corrected by the predetermined method, and

the viewpoint coordinates set to the scenario data are also corrected by the predetermined method during correcting.

**12.** A computer program embedded on a non-transitory computer-readable recording medium, which realizes support for creation of content that allows an image to be displayed in an image processing device, which changes a display area of an image being displayed according to a viewpoint moving request input by a user, in such a manner that the display area is changed based on scenario data in which a change in viewpoint coordinates is set in advance regardless of the viewpoint moving request, comprising:

a module configured to receive a specification of viewpoint coordinates corresponding to a target area intended to be displayed by a content creator;

a module configured to record the received specification in memory;

a module configured to identify a method for correcting viewpoint coordinates obtained by sequentially converting a signal of the viewpoint moving request input by the user in the image processing device;

a module configured to read out the viewpoint coordinates corresponding to the target area; and

a module configured to generate the scenario data such that the viewpoint coordinates corresponding to the target area are obtained when the viewpoint coordinates set to the scenario data are corrected by the method for correcting.

**13.** A computer program embedded on a non-transitory computer-readable recording medium, which realizes image processing for changing a display area of an image being displayed based on scenario data in which a viewpoint moving request input by a user or a change in viewpoint coordinates is set in advance, comprising:

a module configured to correct, by a predetermined method, viewpoint coordinates obtained by sequentially converting a signal of the viewpoint moving request input by the user;

a module configured to determine, as an area to be displayed, an area corresponding to the viewpoint coordinates as corrected; and

a module configured to read out and then to render data of an image in the area to be displayed, wherein

the change in the viewpoint coordinates is set to the scenario data such that viewpoint coordinates corresponding to a target area intended to be displayed by a creator of the scenario data are obtained when set viewpoint coordinates are corrected by the predetermined method, and

the viewpoint coordinates set to the scenario data are also corrected by the predetermined method in the module configured to correct.

**14.** A non-transitory computer-readable recording medium having embodied thereon a computer program product, which realizes support for creation of content that allows an image to be displayed in an image processing device, which changes a display area of an image being displayed according to a viewpoint moving request input by a user, in such a manner that the display area is changed based on scenario data in which a change in viewpoint coordinates is set in advance regardless of the viewpoint moving request, comprising:

a module configured to receive a specification of viewpoint coordinates corresponding to a target area intended to be displayed by a content creator;

a module configured to record the received specification in memory;

a module configured to identify a method for correcting viewpoint coordinates obtained by sequentially converting a signal of the viewpoint moving request input by the user in the image processing device;

a module configured to read out the viewpoint coordinates corresponding to the target area; and

a module configured to generate the scenario data such that the viewpoint coordinates corresponding to the target area are obtained when the viewpoint coordinates set to the scenario data are corrected by the method for correcting.

15. A non-transitory computer-readable recording medium having embodied thereon a computer program product, which realizes image processing for changing a display area of an image being displayed based on scenario data in which a viewpoint moving request input by a user or a change in viewpoint coordinates is set in advance, comprising:

a module configured to correct, by a predetermined method, viewpoint coordinates obtained by sequentially converting a signal of the viewpoint moving request input by the user;

a module configured to determine, as an area to be displayed, an area corresponding to the viewpoint coordinates as corrected; and

a module configured to read out and then to render data of an image in the area to be displayed, wherein the change in the viewpoint coordinates is set to the scenario data such that viewpoint coordinates corresponding to a target area intended to be displayed by a creator of the scenario data are obtained when set viewpoint coordinates are corrected by the predetermined method,

the viewpoint coordinates set to the scenario data are also corrected by the predetermined method in the module configured to correct.

16. A data structure of image display content that associates data of an image and scenario data in which a change in viewpoint coordinates is set in advance to allow the image to be displayed in an image processing device, which changes a display area of an image being displayed according to a viewpoint moving request input by a user, in such a manner that the display area is changed regardless of the viewpoint moving request, wherein the change in the viewpoint coordinates is set to the scenario data such that viewpoint coordinates corresponding to a target area intended to be displayed by a creator of the scenario data are obtained when set viewpoint coordinates are corrected by a method for correcting viewpoint coordinates obtained by sequentially converting a signal of the viewpoint moving request input by the user in the image processing device.

FIG.1

## FIG.2

## FIG.3

## FIG.4

## FIG.5

## FIG.6

## FIG.7

FIG.8

FIG.9

FIG.10

INPUT VALUE  y   z   a   b   c   d   e   f   g

TARGET VALUE  $P_0$  $P_1$  $P_2$  $P_3$  $P_4$  $P_5$  $P_6$

t1  t2  t3                                    TIME

FIG.11

START

INSTRUCT TO
START CONTENT CREATION — S30

ACQUIRE TARGET VIEWPOING
COORDINATES — S32

IDENTIFY VIEWPOINT COORDINATE
CORRECTION METHOD — S34

DERIVE SCENARIO DATA
GENERATION EQUATION — S36

GENERATE SCENARIO DATA — S38

FORM CONTENT FILE — S40

END

# FIG.12

```
                    ( START )
                        |
         INSTRUCT CONTENT EXECUTION    S42
                        |
           DISPLAY INITIAL IMAGE       S43
                        |
    +------------------>|
    |                   |              S44
    |              < MANUAL MODE? >------------------+
    |                   |         N                  |
    |                   | Y                          |              S48
    |                   |                      < SCENARIO MODE? >------+
    |          ACQUIRE VIEWPOINT   S46           |           N        |
    |       MOVING REQUEST SIGNAL                | Y                  |
    |                   |                    READ OUT SCENARIO DATA   S50
    |                   |<---------------------------+                |
    |       CORRECT VIEWPOING COORDINATES  S52                        |
    |                   |                                             |
    |       DETERMINE FRAME COORDINATES    S54                        |
    |                   |                                             |
    |           UPDATE IMAGE FRAME         S56                        |
    |                   |<--------------------------------------------+
    |                   |                              S58
    +--------< INSTRUCT TO END CONTENT? >
        N               |
                        | Y
                    ( END )
```

## INTERNATIONAL SEARCH REPORT

| | International application No. |
|---|---|
| | PCT/JP2010/002807 |

**A. CLASSIFICATION OF SUBJECT MATTER**
*G06T17/40*(2006.01)i, *A63F13/00*(2006.01)i

According to International Patent Classification (IPC) or to both national classification and IPC

**B. FIELDS SEARCHED**

Minimum documentation searched (classification system followed by classification symbols)
G06T17/40, A63F13/00

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-309612 A (Toppan Printing Co., Ltd.), 09 November 2006 (09.11.2006), abstract (Family: none) | 1-16 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 June, 2010 (03.06.10) | 15 June, 2010 (15.06.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 468 370 A1**

**REFERENCES CITED IN THE DESCRIPTION**

**Patent documents cited in the description**

- US 6563999 B